## Europäisches Patentamt
## European Patent Office
## Office européen des brevets

(19)

(11) Numéro de publication: **0 227 520**
**B1**

(12)
# FASCICULE DE BREVET EUROPEEN

(45) Date de publication du fascicule du brevet:
**20.12.89**

(51) Int. Cl.⁴: **G 06 F 11/20,** G 08 G 5/00,
G 05 B 9/02

(21) Numéro de dépôt: **86402540.8**

(22) Date de dépôt: **14.11.86**

(54) **Système pour la commande centralisée d'une pluralité d'appareils de radiocommunication et de radionavigation montés à bord d'un aéronef.**

(30) Priorité: **20.11.85 FR 8517181**

(43) Date de publication de la demande:
**01.07.87 Bulletin 87/27**

(45) Mention de la délivrance du brevet:
**20.12.89 Bulletin 89/51**

(84) Etats contractants désignés:
**BE DE ES GB IT NL**

(56) Documents cités:
**DE-A- 3 112 766**
**US-A- 3 377 623**
**US-A- 3 701 945**
**US-A- 4 208 715**

**COLLOQUE INTERNATIONAL SUR LES SYSTEMES ELECTRONIQUES D'AIDE A LA NAVIGATION AERIENNE, INTERNATIONAL CONFERENCE ON ELECTRONIC SYSTEMS AND NAVIGATION AIDS, 14/18 novembre 1977, pages 253-268, Session IX, Systèmes Intégrés; Communication IX.5, Paris, FR; Lj. MILOSEVIC: "Système intégré de navigation, contrôle du trafic, anticollision et communications: SINTAC- C2"**

(73) Titulaire: **AEROSPATIALE Société Nationale Industrielle, 37, Boulevard de Montmorency, F-75781 Paris Cédex 16 (FR)**

(72) Inventeur: **Fourmaud, Gérald, 8 rue Théophile Gautier, F-31700 Blagnac (FR)**
Inventeur: **Fornasier, Gilles, 23 Bld. des Minimes Bat. F Appartement 250, F-31200 Toulouse (FR)**
Inventeur: **Pichavant, Claude, 13, Chemin du sang de Serp, F-31200 Toulouse (FR)**

(74) Mandataire: **Bonnetat, Christian et al, Cabinet PROPI Conseils 23 rue de Léningrad, F-75008 Paris (FR)**

ACTORUM AG

## Description

La présente invention concerne un système pour la commande centralisée d'une pluralité d'appareils de radiocommunication et d'appareils de radionavigation montés à bord d'un aéronef.

On sait que, notamment pour des raisons de sécurité et de facilité d'exploitation, un aéronef comporte une pluralité d'appareils de radiocommunication pouvant être utilisés indépendamment ou simultanément par l'un quelconque des membres d'équipage. Chacun de ces appareils de radiocommunication présente son propre dispositif de commande de sorte qu'il en résulte un encombrement excessif du poste de pilotage, ainsi qu'un manque de souplesse d'exploitation.

Par ailleurs, on sait également que les avions gros porteurs modernes sont pourvus de calculateurs de gestion de vol effectuant les calculs de positions de l'avion et élaborant les plans de vol. Ces calculateurs de gestion de vol gèrent notamment certains appareils de radionavigation. Généralement, on prévoit à bord d'un tel avion deux calculateurs de gestion de vol, à chacun desquels est associé un groupe d'appareils de navigation.

La présente invention a pour objet un système permettant une utilisation généralisée des calculateurs de gestion de vol et de tous les appareils de radiocommunication et de radionavigation avec une très faible probabilité de défaillance, la commande centralisée et simplifiée de tous les appareils de radiocommunication et de radionavigation par le pilote et/ou le copilote, ainsi que la réalisation de ces fonctions au moyen d'une structure redondante et de boîtiers de commande simplifiés.

A ces fins, selon l'invention, le système pour la commande centralisée de deux groupes d'appareils de radiocommunication et de deux groupes d'appareils de radionavigation montés à bord d'un aéronef pourvu de deux calculateurs de gestion de vol, chacun desdits calculateurs de gestion de vol gérant le fonctionnement des appareils de radionavigation de l'un desdits groupes est caractérisé:

— en ce qu'il comporte deux dispositifs de commande dialoguant entre eux, respectivement associés auxdits groupes d'appareils de radiocommunication et comportant chacun des moyens de calcul, des moyens de sélection d'appareils de radiocommunication, des moyens de sélection d'appareils de radionavigation, des moyens de réglage de fréquence et des moyens de commutation;

— en ce que chaque dispositif de commande est susceptible de commander, en fonctionnement normal, la totalité des appareils de radiocommunication du groupe qui lui est associé, et en fonctionnement de secours, lorsque l'autre dispositif de commande est hors service, la totalité des appareils de radiocommunication du groupe associé à cet autre dispositif de commande;

— en ce que chaque calculateur de gestion de vol est susceptible de commander, en fonctionnement normal, la totalité des appareils de radionavigation du groupe qui lui est associé, et, en fonctionnement de secours lorsque l'autre calculateur de gestion de vol est hors service, la totalité des appareils de radionavigation du groupe associé à cet autre calculateur de gestion de vol;

— en ce que la commande d'un groupe d'appareils de radionavigation par le calculateur de gestion de vol associé s'effectue par l'intermédiaire d'une première position des moyens de commutation de celui des deux dispositifs de commande qui est associé à cet effet audit calculateur; et

— en ce que, dans le cas où les deux calculateurs de gestion de vol sont hors service, la commande de chacun des groupes des appareils de radionavigation est obtenue par le dispositif de commande associé, à travers une seconde position desdits moyens de commutation de celui-ci.

Ainsi, on obtient un système de commande centralisée particulièrement sûr permettant:

— la commande directe des appareils de radiocommunication à partir de signaux élaborés dans l'un quelconque des dispositifs de commande;

— la commande directe des appareils de radionavigation à partir de l'un quelconque des calculateurs de gestion de vol ou à partir du dispositif de commande associé;

— l'utilisation de chaque dispositif de commande comme simple élément de transit pour les signaux issus du calculateur de gestion de vol associé;

— la réalisation simple des dispositifs de commande, en évitant l'obligation de multiplexage des signaux des calculateurs de gestion de vol et de ceux des dispositifs de commande.

De préférence, les deux dispositifs de commande sont installés sur le pylône central du poste de pilotage, à portée du pilote et du copilote.

Dans certains cas, il peut être avantageux, notamment au point de vue de la souplesse d'utilisation et de fonctionnement du système selon l'invention, de prévoir un troisième dispositif de commande, par exemple installé dans le plafond du poste de pilotage.

Aussi, dans une variante de réalisation de l'invention, le système pour la commande centralisée de deux groupes d'appareils de radiocommunication et de deux groupes d'appareils de radionavigation montés à bord d'un aéronef pourvu de deux calculateurs de gestion de vol, chacun desdits calculateurs de gestion de vol gérant le fonctionnement des appareils de radionavigation de l'un desdits groupes, est caractérisé:

— en ce qu'il comporte deux dispositifs de commande principaux dialoguant entre eux, respectivement associés auxdits groupes d'appareils de radiocommunication et comportant chacun des moyens de calcul, des moyens de sélection d'appareils de radiocommunication, des moyens de sélection d'appareils de radionavigation, des moyens de réglage de fréquence, des premiers moyens de commutation et des seconds moyens de commutation;

— en ce qu'il comporte un dispositif de commande auxiliaire dialoguant avec lesdits dispositifs de commande principaux et comportant des moyens de calcul, des moyens de sélection d'appareils de radiocommunication et des moyens de réglage de fréquence;

— en ce que, en fonctionnement normal, la totalité des appareils de radiocommunication d'un groupe est commandable soit à partir du dispositif de commande principal qui lui est associé à travers une première position desdits seconds moyens de commutation, soit à partir dudit dispositif de commande auxiliaire à travers le dispositif de commande principal correspondant;

— en ce que, lorsqu'un dispositif de commande principal est hors service, la totalité des appareils de radiocommunication du groupe associé est commandable à partir de l'autre dispositif de commande principal ou à partir du dispositif de commande auxiliaire, à travers une seconde position desdits seconds moyens de commutation du dispositif de commande principal hors service;

— en ce que, lorsque les deux dispositifs de commande principaux sont hors service, la totalité des appareils de radiocommunication du groupe associé à l'un desdits dispositifs de commande principaux est commandable à partir du dispositif de commande auxiliaire, à travers ladite seconde position desdits moyens de commutation du dispositif de commande principal correspondant;

— en ce que, lorsqu'un dispositif de commande principal et le dispositif de commande auxiliaire sont hors service, les appareils de radiocommunication du groupe associé audit dispositif de commande principal hors service sont commandables à partir de l'autre dispositif de commande principal;

— en ce que chaque calculateur de gestion de vol est susceptible de commander, en fonctionnement normal, la totalité des appareils de radionavigation du groupe qui lui est associé et, en fonctionnement de secours lorsque l'autre calculateur de gestion de vol est hors service, la totalité des appareils de radionavigation du groupe associé à cet autre calculateur de gestion de vol;

— en ce que la commande du groupe d'appareils de radionavigation par le calculateur de gestion de vol associé s'effectue par l'intermédiaire d'une première position desdits premiers moyens de commutation de celui des deux dispositifs de commande principaux qui est associé à cet effet audit calculateur; et

— en ce que, dans le cas où les deux calculateurs de gestion de vol sont hors service, la commande de chacun des groupes des appareils de radionavigation est obtenue par le dispositif de commande principal associé, à travers une seconde position desdits premiers moyens de commutation de celui-ci.

Un tel dispositif de commande auxiliaire peut présenter une structure semblable à celle des dispositifs de commande principaux, seule une partie de cette structure étant utilisée.

Afin d'obtenir une structure simple pour le système conforme à l'invention, il est avantageux que chacun des appareils de radiocommunication comporte une entrée prioritaire commandable et une entrée auxiliaire, lesdites entrées étant agencées de façon que, lorsque ladite entrée prioritaire est commandée, ladite entrée auxiliaire est fermée et que, lorsque ladite entrée prioritaire n'est pas commandée, ladite entrée auxiliaire est ouverte et que les entrées prioritaires commandables et les entrées auxiliaires des appareils de radiocommunication de chacun desdits groupes soient respectivement reliées au dispositif de commande associé à ce

groupe et au dispositif de commande associé à l'autre desdits groupes.

Pour une raison identique, il est également avantageux que chacun des appareils de radionavigation comporte une entrée prioritaire commandable et une entrée auxiliaire, lesdites entrées étant agencées de façon que, lorsque ladite entrée prioritaire est commandée, ladite entrée auxiliaire est fermée et que, lorsque ladite entrée prioritaire n'est pas commandée, ladite entrée auxiliaire est ouverte et que les entrées prioritaires commandables et les entrées auxiliaires des appareils de radionavigation de chacun desdits groupes soient respectivement reliées au calculateur de gestion de vol associé à ce groupe à travers les moyens de commutation du dispositif de commande associé et au calculateur de gestion de vol associé à l'autre desdits groupes par une liaison directe.

De préférence, les entrées prioritaires commandables des appareils de radiocommunication et des appareils de radionavigation sont activées par un signal électrique simple, tel qu'une mise à la masse, par exemple.

Les figures du dessin annexé feront bien comprendre comment l'invention peut être réalisée. Sur ces figures, des références identiques désignent des éléments semblables.

La figure 1 est une représentation schématique d'un mode de réalisation du système selon l'invention.

La figure 2 donne le schéma synoptique d'un mode de réalisation d'un dispositif de commande pour le système de la figure 1.

La figure 3 est une vue de la face avant du dispositif de commande de la figure 2.

La figure 4 illustre schématiquement le fonctionnement normal du système de la figure 1, pour la commande des appareils de radiocommunication.

La figure 5 illustre schématiquement une configuration de panne dans le fonctionnement du système de la figure 1, pour la commande des appareils de radiocommunication.

La figure 6 illustre schématiquement le fonctionnement normal du système de la figure 1, pour la commande des appareils de radionavigation.

Les figures 7 et 8 illustrent schématiquement deux configurations de pannes dans le fonctionnement du système de la figure 1, pour la commande des appareils de radionavigation.

La figure 9 illustre schématiquement une variante de réalisation du système selon l'invention.

La figure 10 est le schéma synoptique d'un dispositif de commande pour le système de la figure 9.

La figure 11 illustre schématiquement le fonctionnement normal du système de la figure 9, pour la commande des appareils de radiocommunication.

Les figures 12 et 13 illustrent schématiquement deux configurations de panne dans le fonctionnement du système de la figure 9, pour la commande des appareils de radiocommunication.

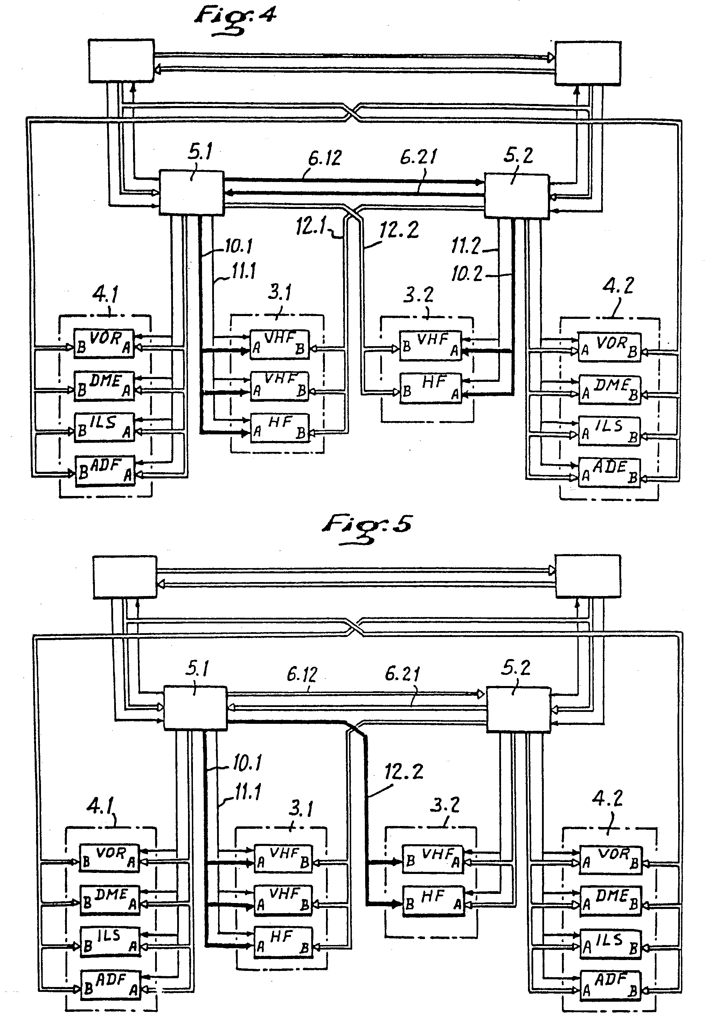

Sur les figures 4 à 8 et 11 à 13, on a représenté en trait noir épais les liaisons actives dans le mode de fonctionnement représenté.

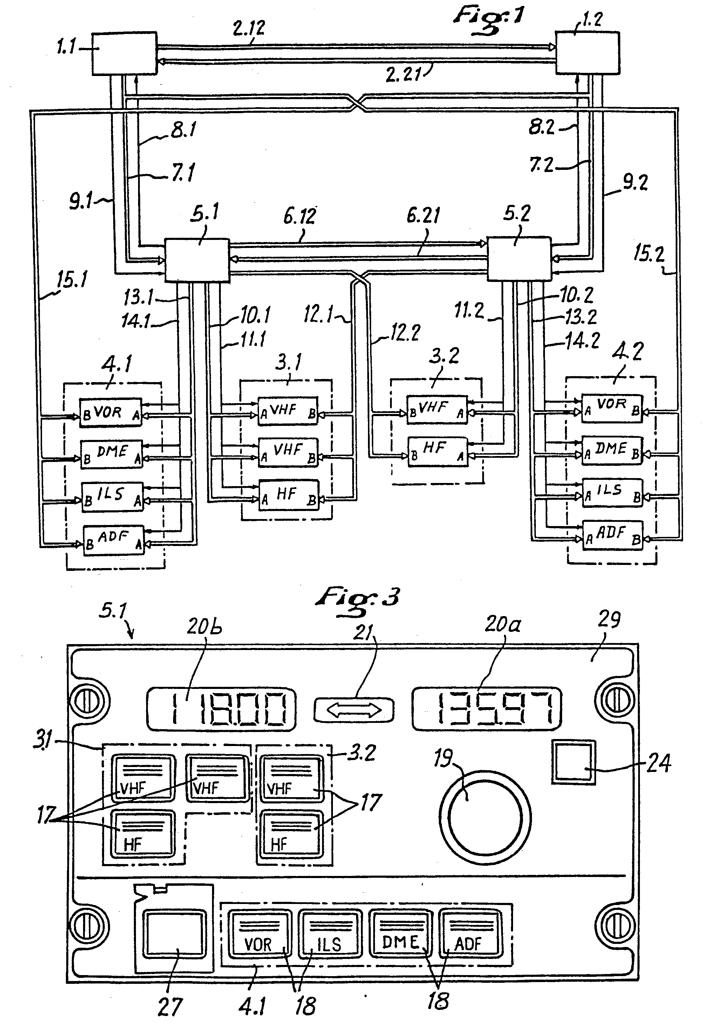

Le système selon l'invention, représenté schématiquement sur la figure 1, est destiné à la commande centralisée d'une pluralité d'appareils de radiocommunication et de radionavigation à bord d'un avion et il comporte deux calculateurs de gestion de vol.

Comme on le sait, ces calculateurs de gestion de vol, qui portent respectivement les références 1.1 et 1.2 sur la figure 1, effectuent les calculs de position de l'avion et élaborent les plans de vol à partir de données préenregistrées et de paramètres de situation et de navigation. Ils sont universellement désignés dans la technique sous l'appellation de «FMC» (Flight Management Computer).

Quoique un seul FMC serait généralement suffisant à bord d'un avion, on préfère, notamment pour des raisons de sécurité, en prévoir deux. Les deux calculateurs 1.1 et 1.2 dialoguent entre eux par deux lignes bus 2.12 et 2.21, qui acheminent respectivement les informations du calculateur 1.1 vers le calculateur 1.2 et du calculateur 1.2 vers le calculateur 1.1.

Pour des raisons de sécurité et de facilité d'exploitation, les différents appareils de radiocommunication prévus à bord de l'avion sont redondants. Ils sont répartis en deux groupes 3.1 et 3.2. Par exemple, le groupe 3.1 comporte deux appareils VHF et un appareil HF, alors que le groupe 3.2 comporte un appareil VHF et un appareil HF.

De façon semblable et pour des raisons identiques, les appareils de radionavigation embarqués sont répartis en deux groupes 4.1 et 4.2. Par exemple, chacun de ces groupes comporte un appareil VOR, un appareil DME, un appareil ILS et un appareil ADF.

Chacun des appareils de radiocommunication et chacun des appareils de radionavigation des quatre groupes 3.1, 3.2, 4.1 et 4.2 comporte une entrée de commande prioritaire A et une entrée de commande auxiliaire B.

L'entrée prioritaire A, qui correspond au fonctionnement normal d'un appareil, est commandable par un signal d'activation, par exemple représenté par une masse; lorsque ledit signal d'activation est présent, l'appareil est commandable par la seule entrée A, l'entrée auxiliaire B de ce dernier étant inhibée. En revanche, l'absence de signal d'activation sur l'entrée prioritaire A d'un appareil inhibe cette entrée, et permet la commande dudit appareil par l'entrée auxiliaire B associée. Ainsi, en cas d'absence dudit signal d'activation sur une entrée prioritaire A, un appareil de radiocommunication ou de radionavigation peut être commandé en secours par son entrée auxiliaire B.

Conformément à la présente invention, on prévoit de plus deux dispositifs de commande 5.1 et 5.2, susceptibles de dialoguer entre eux par l'intermédiaire de lignes bus directionnelles 6.12 et 6.21. Le dispositif de commande 5.1 est interposé entre le calculateur 1.1 et les groupes 3.1 et 4.1. Symétriquement, le dispositif de commande 5.2 est interposé entre le calculateur 1.2 et les groupes 3.2 et 4.2.

Chaque dispositif de commande 5.1 et 5.2 est susceptible de recevoir des informations du calculateur 1.1 ou 1.2 correspondant, par l'intermédiaire d'une ligne bus 7.1 ou 7.2, respectivement. Par une liaison 8.1 ou 8.2, chaque dispositif de commande 5.1 et 5.2 peut adresser au calculateur 1.1 ou 1.2 associé un signal d'état. En outre, par une liaison 9.1 ou 9.2, chaque calculateur 1.1 ou 1.2 peut adresser au dispositif de commande 5.1 ou 5.2 associé un signal d'activation pour les entrées prioritaires A des appareils de navigation associés.

Par ailleurs:

— une ligne bus 10.1 et une ligne de commande 11.1 relient le dispositif de commande 5.1 aux entrées A des appareils de radiocommunication du groupe 3.1;

— une ligne bus 12.1 relie le dispositif de commande 5.2 aux entrées B des appareils de radiocommunication du groupe 3.1;

— une ligne bus 10.2 et une ligne de commande 11.2 relient le dispositif de commande 5.2 aux entrées A des appareils de radiocommunication du groupe 3.2;

— une ligne bus 12.2 relie le dispositif de commande 5.1 aux entrées B des appareils de radiocommunication du groupe 3.2;

— une ligne bus 13.1 et une ligne de commande 14.1 relient le dispositif de commande 5.1 aux entrées A des appareils de radionavigation du groupe 4.1;

— une ligne bus 15.1 relie le calculateur 1.2 aux entrées B des appareils de radionavigation du groupe 4.1;

— une ligne bus 13.2 et une ligne de commande 14.2 relient le dispositif de commande 5.2 aux entrées A des appareils de radionavigation du groupe 4.2; et

— une ligne bus 15.2 relie le calculateur 1.1 aux entrées B des appareils de radionavigation du groupe 4.2.

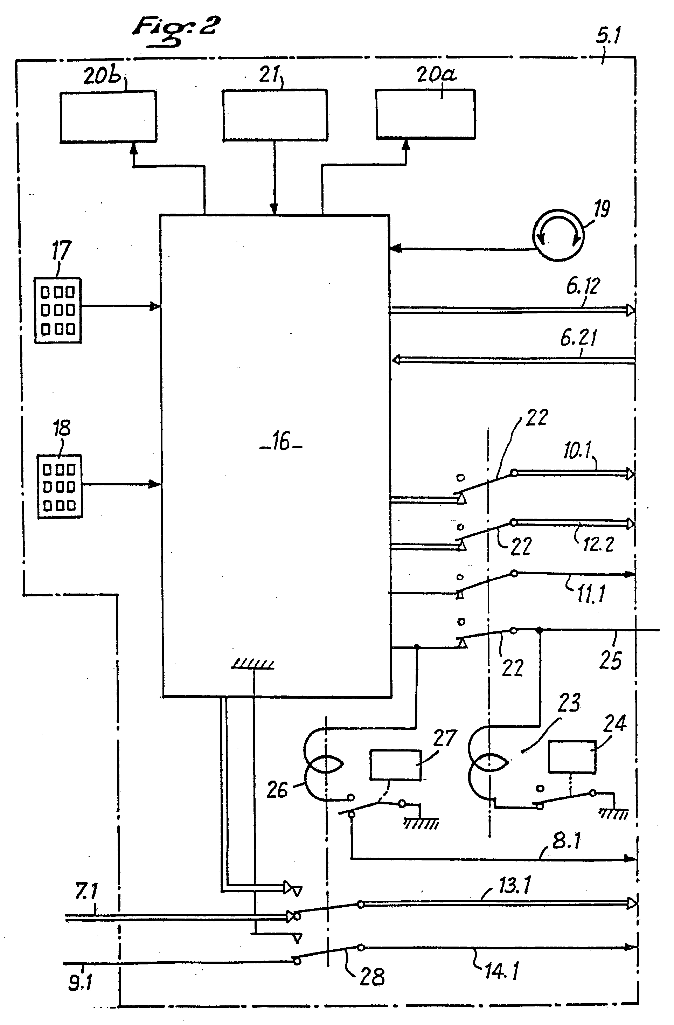

Sur la figure 2, on a représenté un exemple de réalisation du dispositif de commande 5.1. Le dispositif de commande 5.2 est identique à ce dernier, de sorte que la figure 2 représente également ce dispositif de commande 5.2, à la condition de remplacer les indices .1, .2, .12 et .21 affectant les diverses références 6 à 14, respectivement par les indices .2, .1, .21 et .12.

Cet exemple de réalisation comporte un ensemble de calcul 16, auquel sont associés des moyens 17 pour la sélection d'un appareil parmi les appareils de radiocommunication des groupes 3.1 et 3.2, des moyens 18 pour la sélection d'un appareil parmi les appareils de radionavigation du groupe 4.1 et des moyens 19 de réglage de fréquence. Dans l'exemple représenté, les moyens 19 de réglage de fréquence sont communs aux appareils de radiocommunication et aux appareils de radionavigation. A l'ensemble de calcul 16 sont de plus associés un dispositif 20a d'affichage transitoire de fréquence, un dispositif d'affichage 20b pour la visualisation de la fréquence actuellement commandée et un dispositif 21 pour le transfert de l'affichage du dispositif 20a vers le dispositif 20b et vice versa.

Les lignes bus 10.1, 12.2, et la ligne de commande 11.1 sont reliées à l'ensemble de calcul 16 par les contacts 22 au travail d'un relais 23, actionnable par un organe de commande 24. Un contact de travail supplémentaire 22 du relais 23 permet l'alimentation électrique de l'ensemble de calcul 16 à partir d'une alimentation 25.

Par ailleurs, un relais 26 alimenté à partir de l'alimentation 25 et commandé par un organe 27 assure par ses contacts au repos 28 la liaison entre la ligne bus 7.1 et la ligne bus 13.1, ainsi que celle entre la ligne de commande 9.1 et la ligne de commande 14.1. Lorsque l'organe de commande 27 est actionné, le relais 26 interrompt ces liaisons et relie la ligne bus 13.1 à l'ensemble de calcul 16 et la ligne 14.1 à une source de signal d'activation des entrées A des appareils de radionavigation (la masse). La ligne de commande 8.1 détecte le passage du repos au travail du relais 26.

Sur la figure 3, on a représenté la face frontale 29 d'une unité électronique réalisant le dispositif de commande 5.1. Sur la face frontale 29 apparaissent:

— trois touches 17, respectivement destinées à permettre la sélection de l'un ou l'autre des deux appareils VHF et de l'appareil HF du groupe 3.1;

— deux touches 17, respectivement destinées à permettre la sélection de l'un ou l'autre des deux appareils VHF et HF du groupe 3.2;

— quatre touches 18, respectivement destinées à permettre la sélection de l'un ou l'autre des appareils VOR, ILS, DME et ADF du groupe 4.1;

— un double bouton rotatif 19, permettant de régler la fréquence des appareils des groupes 3.1, 3.2 et 4.1;

— les dispositifs d'affichage 20a et 20b ainsi que le dispositif de transfert 21;

— l'organe de commande 24 du relais 23; et

— l'organe de commande 27 du relais 26.

Ainsi, lorsqu'un membre de l'équipage de l'avion désire, à partir du dispositif de commande 5.1, modifier la fréquence sur laquelle travaille l'un des appareils de radiocommunication des groupes 3.1 ou 3.2, fréquence qui est alors affichée sur le dispositif 20b, il commence par choisir cet appareil en agissant sur la touche 17 appropriée, de sorte que l'ensemble de calcul 16 connaît l'appareil dont il faut modifier la fréquence. Ensuite, grâce au bouton rotatif 19, l'opérateur choisit la fréquence désirée qui apparaît sur le dispositif d'affichage 20a. Par action sur le dispositif de transfert 21, l'ensemble de calcul 16:

— transfère l'affichage de la nouvelle fréquence du dispositif 20a au dispositif 20b; et

— élabore un signal de commande de fréquence correspondant à la nouvelle fréquence et comportant une adresse spécifique de l'appareil choisi, dont on veut modifier la fréquence.

Ensuite, si cet appareil choisi fait partie du groupe 3.1, l'ensemble de calcul 16 adresse ledit signal de commande de fréquence sur la ligne bus 10.1, à travers le contact de travail 22 correspondant du relais 23. Par ailleurs, à cause de la position du relais 23, la ligne 11.1 est activée (à la masse). Par suite, toutes les entrées A des trois appareils du groupe 3.1 sont activées et reçoivent ledit signal de commande de fréquence. Cependant, à cause de l'adresse contenue dans celui-ci, seul l'appareil concerné exploitera le signal de la ligne 10.1 pour modifier sa fréquence à la nouvelle valeur choisie. De plus, par la ligne de dialogue 6.12, l'ensemble de calcul 16 du dispositif de commande 5.1 prévient l'ensemble de calcul 16 du dispositif de commande 5.2 du changement de fréquence intervenu. Le dispositif de commande 5.2 prend alors en compte cette information, qu'il affichera dans son dispositif 20b lorsque l'appareil concerné sera sélecté par le dispositif 5.2.

En revanche, si l'appareil de radiocommunication dont on veut modifier la fréquence à partir du dispositif de commande 5.1 appartient au groupe 3.2, l'ensemble 16 du dispositif 5.1 adresse les informations nécessaires à l'ensemble 16 du dispositif 5.2 par l'intermédiaire de la ligne 6.12. Le dispositif de commande 5.2 opère alors le changement de fréquence désiré par l'intermédiaire de ses lignes 10.2 et 11.2, en actionnant l'entrée A de l'appareil concerné.

Bien entendu, la commande de fréquence des appareils de radiocommunication des groupes 3.1 et 3.2 peut être effectuée, de façon parfaitement symétrique, à partir du dispositif de commande 5.2. Par suite, comme cela est représenté schématiquement sur la figure 4, sur laquelle on a représenté en trait noir épais les lignes bus actives, en fonctionnement normal, la commande de changement de fréquence des appareils de radiocommunication s'effectue à partir des dispositifs 5.1 et 5.2, par l'intermédiaire des lignes bus 6.12, 6.21, 10.1, et 10.2 et des lignes de commande 11.1 et 11.2.

On remarquera que le signal de commande de fréquence engendré par l'ensemble 16 du dispositif 5.1 ou du dispositif 5.2 est également véhiculé par la ligne bus 12.1 ou 12.2 correspondante. Cependant, les entrées B des appareils de radiocommunication sont alors inhibées (puisque les entrées A sont actives) de sorte que le signal sur les lignes 12.1 et 12.2 n'a aucune action.

En revanche, lorsque l'un des dispositifs de commande est hors circuit (panne et/ou mise hors circuit par action sur l'organe de commande 24 de son relais d'alimentation 23), les entrées A des appareils de radiocommunication associées ne sont pas activées par la ligne 11.1 ou 11.2 correspondante, de sorte que les entrées B sont sensibles au signal de changement de fréquence présent sur la ligne 12.1 ou 12.2 reliée à l'autre dispositif de commande 5.1 ou 5.2. Ainsi, en cas de panne et/ou de mise hors circuit du dispositif de commande 5.2, le changement de fréquence des appareils du groupe 3.2 est effectué par l'intermédiaire de la ligne bus 12.2.

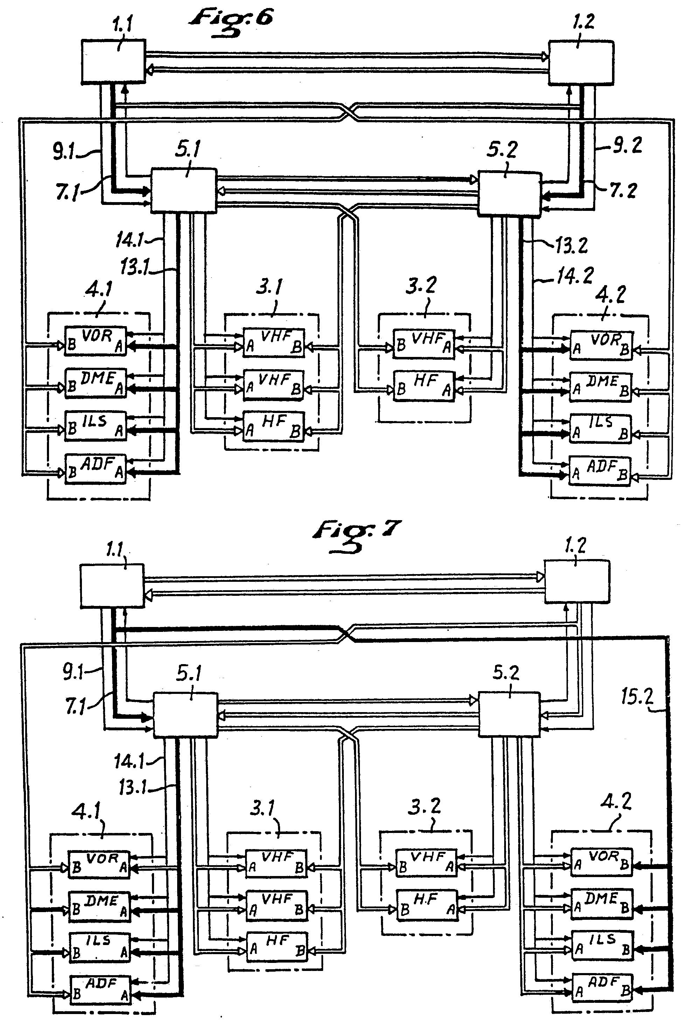

Cette configuration est illustrée par la figure 5, qui montre de plus que le changement de fréquence des appareils du groupe 3.1 reste assuré par les lignes 10.1 et 11.1. Bien entendu, de façon symétrique, si le dispositif 5.1 était en panne et/ou hors circuit, le changement de fréquence des appareils de radiocommunication serait assuré, à partir du dispositif 5.2, par l'intermédiaire des lignes 10.2 et 11.2 pour les appareils du groupe 3.2 et par l'intermédiaire de la ligne 12.1 pour les appareils du groupe 3.1.

Par ailleurs, en fonctionnement normal des dispositifs de commande 5.1 et 5.2, les liaisons sont assurées entre les lignes 7.1 et 13.1, 9.1 et 14.1, 7.2 et 13.2, 9.2 et 14.2, à travers les contacts de repos 28 du relais 26. Par suite, le calculateur de gestion de vol 1.1 peut effectuer directement le changement de fréquence d'un des appareils de radionavigation du groupe 4.1, en adressant sur la ligne 7.1, et donc sur la ligne 13.1, un signal de commande de fréquence comprenant une adresse spécifique pour l'appareil concerné et sur la ligne de commande 9.1, et donc sur la ligne 14.1, un signal d'activation. Les appareils de radionavigation sont donc alors commandés en fréquence par leurs entrées A. De façon symétrique et identique, le calculateur de gestion de vol 1.2 peut procéder à la commande de fréquence des appareils de radionavigation du groupe 4.2. Cette configuration est illustrée par la figure 6.

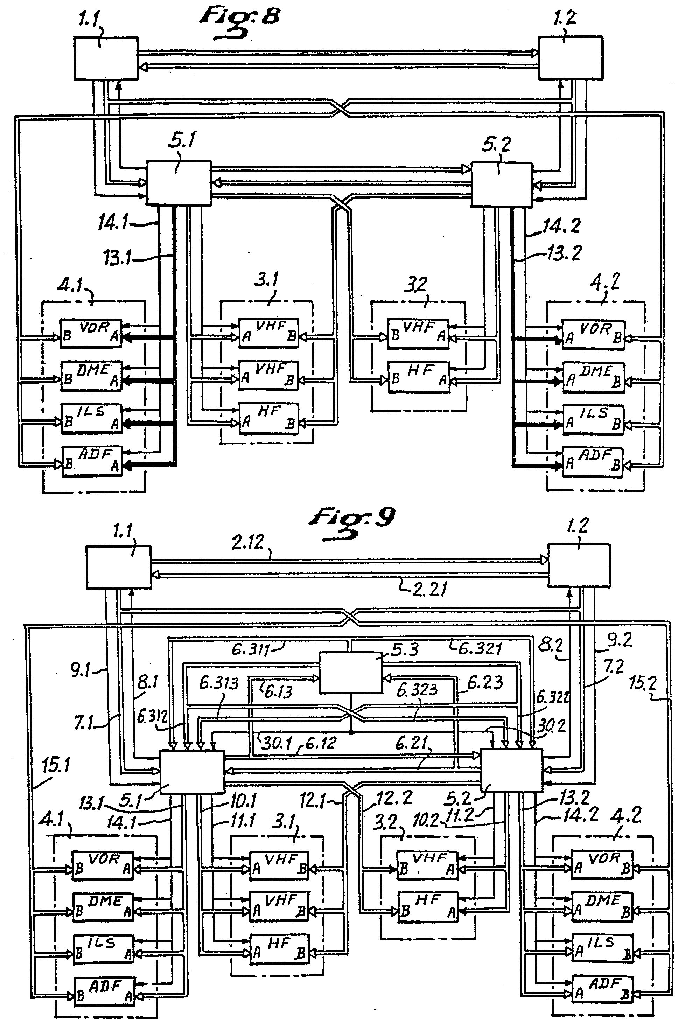

Cependant, si l'un des calculateurs de gestion de vol 1.1 ou 1.2 tombe en panne et/ou est mis hors circuit, il est alors possible de commander à partir du calculateur restant en fonctionnement les appareils de radionavigation du groupe associé au calculateur hors service. Pour cela, les ordres sont adressés aux entrées B desdits appareils par la ligne 15.1 ou 15.2 appropriée véhiculant un signal contenant l'adresse spécifique de l'appareil de navigation dont la fréquence doit être modifiée. En effet, ces entrées B sont alors actives, puisqu'alors la ligne 14.1 ou 14.2 ne véhicule pas de signal de validation des entrées A. Ceci résulte d'une panne du calculateur 1.1 ou 1.2. Sur la figure 7, on a illustré schématiquement la configuration pour laquelle le calculateur de gestion de vol 1.2 est hors service, de sorte que les appareils de radionavigation du groupe 4.2 sont commandés en fréquence par le calculateur 1.1, à travers la ligne 15.2. Bien entendu, la configuration serait symétrique si le calculateur 1.1 était hors service, le calculateur 1.2 commandant alors les appareils du groupe 4.1 à travers la ligne 15.1.

Dans le cas où les deux calculateurs de gestion 1.1 et 1.2 seraient hors service, les organes 27 des deux dispositifs de commande 5.1 et 5.2 sont actionnés, de sorte que le relais 26 bascule et que les lignes 13.1 et 14.1 d'une part, 13.2 et 14.2 d'autre part, sont reliées par les contacts 28 au travail dudit relais 26 à l'ensemble de calcul 16 et à la source de signal d'activation correspondants. Chaque dispositif de commande 5.1 et 5.2 peut alors commander les appareils de radionavigation des groupes 4.1 et 4.2 grâce à son ensemble de calcul 16. La configuration correspondante est représentée sur la figure 8.

Dans la variante de réalisation représentée sur la figure 9, le système selon l'invention comporte un dispositif de commande auxiliaire 5.3 supplémentaire, susceptible:

— de dialoguer avec le dispositif de commande 5.1 par l'intermédiaire des lignes bus 6.13 et 6.311;

— de dialoguer avec le dispositif de commande 5.2 par l'intermédiaire des lignes bus 6.23 et 6.321;

— d'adresser des signaux d'activation des entrées A des appareils de radiocommunication sur des lignes 30.1 et 30.2, aboutissant respectivement aux dispositifs de commande 5.1 et 5.2;

— d'adresser des informations de fréquence pour les appareils de radiocommunication sur des lignes bus 6.312 et 6.313 aboutissant au dispositif de commande 5.1 et sur des lignes bus 6.322 et 6.323 aboutissant au dispositif de commande 5.2.

Exception faite du dispositif de commande auxiliaire 5.3, des lignes bus 6.13, 6.311, 6.312, 6.313, 6.23, 6.321, 6.322, 6.323 et des lignes de commande 30.1 et 30.2, le système de la figure 9 est identique à celui de la figure 1.

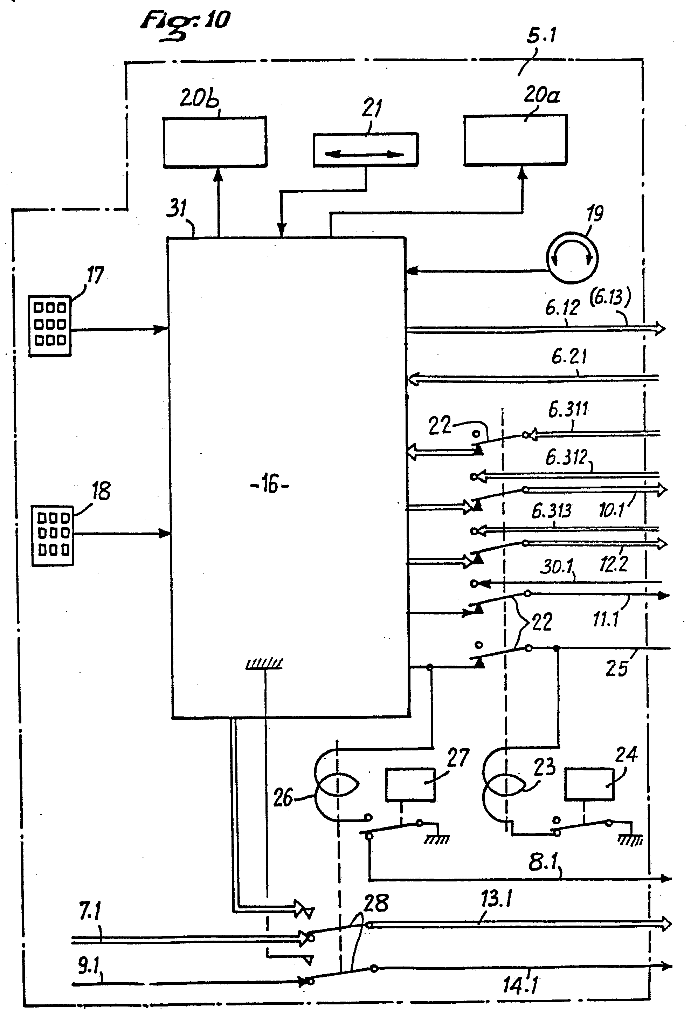

Sur la figure 10, on a représenté un mode de réalisation du dispositif de commande 5.1 approprié au système de la figure 9. Ce mode de réalisation (qui s'applique mutatis mutandis au dispositif 5.2) est pour l'essentiel identique au mode de réalisation de la figure 2, sauf en ce que:

— la ligne bus 6.13 est commune avec la ligne 6.12

— la ligne bus 6.311 est reliée à l'ensemble de calcul 16 à travers la position de travail d'un contact 22 supplémentaire du relais 23;

— le contact 22, qui en position de travail du relais 23 relie la ligne bus 10.1 à l'ensemble de calcul 16, connecte par sa position de repos ladite ligne bus 10.1 à la ligne bus 6.312;

— le contact 22, qui en position de travail du relais 23 relie la ligne bus 12.2 à l'ensemble de calcul 16, connecte par sa position de repos ladite ligne bus 12.2 à la ligne bus 6.313; et

— le contact 22, qui en position de travail du relais 23 relie la ligne de commande 11.1 à l'ensemble de calcul 16, connecte par sa position de repos ladite ligne de commande 11.1 à la ligne 30.1.

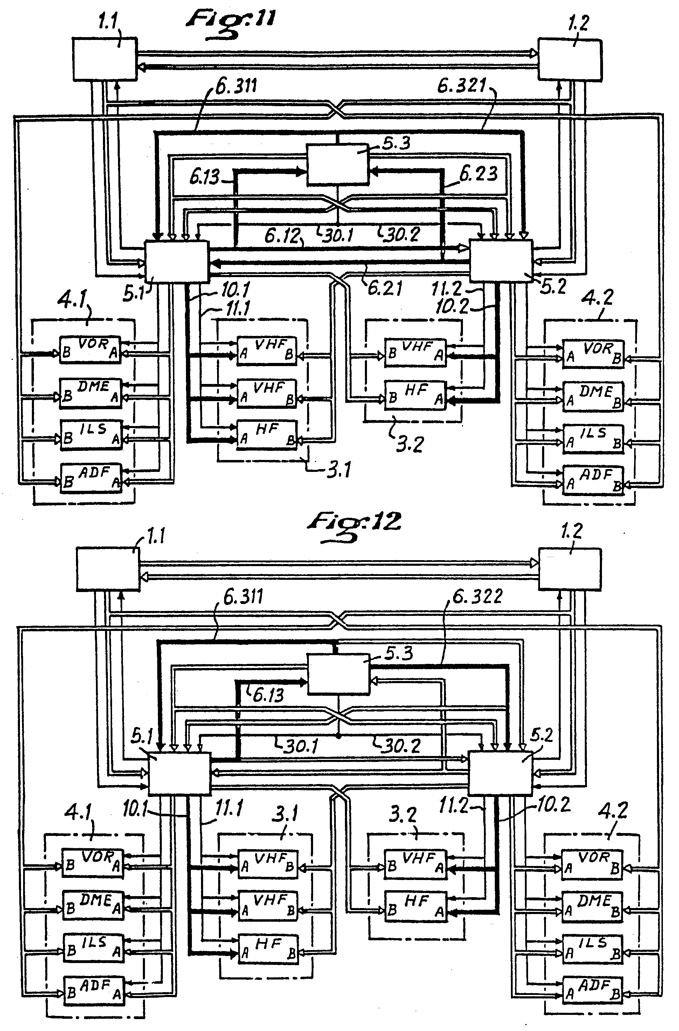

Ainsi, en fonctionnement normal, (position représentée sur la figure 10), les dispositifs de commande 5.1, 5.2 et 5.3 dialoguent entre eux par les lignes 6.12, 6.13, 6.21, 6.23, 6.311 et 6.321 et il est possible de commander n'importe lequel des appareils de radiocommunication des groupes 3.1 et 3.2 à partir de n'importe lequel desdits dispositifs de commande, par l'intermédiaire des lignes 10.1, 11.1, 10.2, et 11.2. Cette configuration est représentée sur la figure 11.

En revanche, si l'un des dispositifs de commande 5.1 ou 5.2 est hors service et que ses contacts 22 ont basculé en position de repos, il s'établit automatiquement une continuité entre la ligne bus 6.312 (ou 6.322) et la ligne 10.1 (ou 10.2), ainsi qu'entre la ligne de commande 30.1 (ou 30.2) avec la ligne de commande 11.1 (ou 11.2). Par suite, les appareils de radiocommunication associés au dispositif de commande 5.1 (ou 5.2) hors service peuvent être commandés à partir de n'importe lequel des dispositifs de commande 5.2 (ou 5.1) et 5.3, les ordres de commande transitant à travers le dispositif de commande hors service. Sur la figure 12, on a illustré le cas où le dispositif de commande 5.2 est hors service.

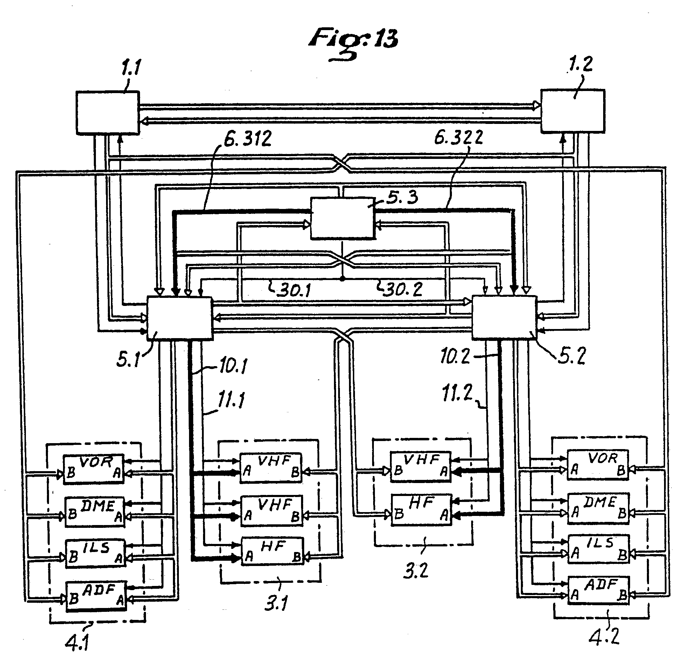

Sur la figure 13, on a supposé que le dispositif 5.1 et le dispositif 5.2 étaient hors service et que les appareils de radiocommunication étaient commandés à partir du seul dispositif 5.3.

Dans le cas où le dispositif 5.3 est hors service, on est ramené à la configuration de la figure 4. De même, si le dispositif 5.3 et l'un des dispositifs 5.1 ou 5.2 sont hors service, on se trouve dans une configuration analogue à celle de la figure 5.

En ce qui concerne la commande des appareils de radionavigation, le dispositif de commande 5.3 est inopérant et tout se passe comme pour le mode de réalisation de la figure 1.

**Revendications**

1. Système pour la commande centralisée de deux groupes (3.1 et 3.2) d'appareils de radiocommunication et de deux groupes (4.1 et 4.2) d'appareils de radionavigation montés à bord d'un aéronef pourvu de deux calculateurs de gestion de vol (1.1 et 1.2), chacun desdits calculateurs de gestion de vol gérant le fonctionnement des appareils de radionavigation de l'un desdits groupes (4.1 et 4.2), caractérisé:

— en ce qu'il comporte deux dispositifs de commande (5.1 et 5.2) dialoguant entre eux, respectivement associés auxdits groupes (3.1 et 3.2) d'appareils de radiocommunication et comportant chacun des moyens de calcul (16), des moyens (17) de sélection d'appareils de radiocommunication, des moyens (18) de sélection d'appareils de radionavigation, des moyens (19) de réglage de fréquence et des moyens de commutation (26, 27, 28);

— en ce que chaque dispositif de commande (5.1 et 5.2) est susceptible de commander, en fonctionnement normal, la totalité des appareils de radiocommunication du groupe qui lui est associé, et, en fonctionnement de secours, lorsque l'autre dispositif de commande est hors service, la totalité des appareils de radiocommunication du groupe associé à cet autre dispositif de commande;

— en ce que chaque calculateur de gestion de vol (1.1 et 1.2) est susceptible de commander, en fonctionnement normal, la totalité des appareils de radionavigation du groupe qui lui est associé, et, en fonctionnement de secours lorsque l'autre calculateur de gestion de vol est hors service, la totalité des appareils de radionavigation du groupe associé à cet autre calculateur de gestion de vol;

— en ce que la commande d'un groupe (4.1 et 4.2) d'appareils de radionavigation par le calculateur de gestion de vol associé (1.1 et 1.2) s'effectue par l'intermédiaire d'une première position des moyens de commutation (26, 27, 28) de celui des deux dispositifs de commande (5.1 et 5.2) qui est associé à cet effet audit calculateur; et

— en ce que, dans le cas où les deux calculateurs de gestion de vol (1.1 et 1.2) sont hors service, la commande de chacun des groupes (4.1 et 4.2) des appareils de radionavigation est obtenue par le dispositif de commande (5.1 et 5.2) associé, à travers une seconde position desdits moyens de commutation (26, 27, 28) de celui-ci.

2. Système pour la commande centralisée de deux groupes (3.1 et 3.2) d'appareils de radiocommunication et de deux groupes (4.1 et 4.2) d'appareils de radionavigation montés à bord d'un aéronef pourvu de deux calculateurs de gestion de vol (1.1 et 1.2), chacun desdits calculateurs de gestion de vol gérant le fonctionnement des appareils de radionavigation de l'un desdits groupes (4.1 et 4.2), caractérisé:

— en ce qu'il comporte deux dispositifs de commande principaux (5.1 et 5.2) dialoguant entre eux, respectivement associés auxdits groupes (3.1 et 3.2) d'appareils de radiocommunication et comportant chacun des moyens de calcul (16), des moyens (17) de sélection d'appareils de radiocommunication, des moyens (18) de sélection d'appareils de radionavigation, des moyens (19) de réglage de fréquence, des premiers moyens de commutation (26, 27, 28) et des seconds moyens de commutation;

— en ce qu'il comporte un dispositif de commande auxiliaire (5.3) dialoguant avec lesdits dispositifs de commande principaux et comportant des moyens de calcul, des moyens de sélection d'appareils de radiocommunication et des moyens de réglage de fréquence;

— en ce que, en fonctionnement normal, la totalité des appareils de radiocommunication d'un groupe est commandable soit à partir du dispositif de commande principal (5.1 et 5.2) qui lui est associé à travers une première position desdits seconds moyens de commutation, soit à partir dudit dispositif de commande auxiliaire à travers le dispositif de commande principal correspondant;

— en ce que, lorsqu'un dispositif de commande principal est hors service, la totalité des appareils de radiocommunication du groupe associé est commandable à partir de l'autre dispositif de commande principal ou à partir du disposition de commande auxiliaire, à travers une seconde position desdits seconds moyens de commutation du dispositif de commande principal hors service;

— en ce que, lorsque les deux dispositifs de commande principaux sont hors service, la totalité des appareils de radiocommunication du groupe associé à l'un desdits dispositifs de commande principaux est commandable à partir du dispositif de commande auxiliaire, à travers ladite seconde position desdits moyens de commutation du dispositif de commande principal correspondant;

— en ce que, lorsqu'un dispositif de commande principal et le dispositif de commande auxiliaire sont hors service, les appareils de radiocommunication du groupe associé audit dispositif de commande principal hors service sont commandables à partir de l'autre dispositif de commande principal;

— en ce que chaque calculateur de gestion de vol (1.1 et 1.2) est susceptible de commander, en fonctionnement normal, la totalité des appareils de radionavigation du groupe qui lui est associé et, en fonctionnement de secours lorsque l'autre calculateur de gestion de vol est hors service, la totalité des appareils de radionavigation du groupe associé à cet autre calculateur de gestion de vol;

— en ce que la commande du groupe (4.1 et 4.2) d'appareils de radionavigation par le calculateur de gestion de vol associé s'effectue par l'intermédiaire d'une première position desdits premiers moyens de commutation (26, 27, 28) de celui des deux dispositifs de commande principaux qui est associé à cet effet audit calculateur et,

— en ce que, dans le cas où les deux calculateurs de gestion de vol (1.1 et 1.2) sont hors service, la commande de chacun des groupes (4.1 et 4.2) des appareils de radionavigation est obtenue par le dispositif de commande principal associé, à travers une seconde position desdits premiers moyens de commutation de celui-ci.

3. Système selon l'une des revendications 1 ou 2, caractérisé en ce que chacun des appareils de radiocommunication comporte une entrée prioritaire commandable (A) et une entrée auxiliaire (B), lesdites entrées étant agencées de façon que, lorsque ladite entrée prioritaire (A) est commandée, ladite entrée auxiliaire (B) est fermée et que, lorsque ladite entrée prioritaire (A) n'est pas commandée, ladite entrée auxiliaire (B) est ouverte et en ce que les entrées prioritaires commandables (A) et les entrées auxiliaires (B) des appareils de radiocommunication de chacun desdits groupes (3.1 et 3.2) sont respectivement reliées au dispositif de commande à ce groupe associé et au dispositif de commande associé à l'autre desdits groupes.

4. Système selon l'une des revendications 1 à 3, caractérisé en ce que chacun des appareils de radionavigation comporte une entrée prioritaire commandable (A) et une entrée auxiliaire (B), lesdits entrées étant agencées de façon que, lorsque ladite entrée prioritaire (A) est commandée, ladite entrée auxiliaire (B) est fermée et que, lorsque ladite entrée prioritaire (A) n'est pas commandée, ladite entrée auxiliaire (B) est ouverte et en ce que les entrées prioritaires commandables (A) et les entrées auxiliaires (B) des appareils de radionavigation de chacun desdits groupes (4.1 et 4.2) sont respectivement reliées au calculateur de gestion de vol (1.1 et 1.2) associé à ce groupe à travers les moyens de commutation (26, 27, 28) du dispositif de commande (5.1, 5.2) associé et au calculateur de gestion de vol associé à l'autre desdits groupes par une liaison directe.

5. Système selon l'une quelconque des revendications 3 ou 4, caractérisé en ce que lesdites entrées prioritaires commandables sont activées par un signal électrique simple, telle qu'une mise à la masse.

6. Système selon l'une quelconque des revendications 2 à 5, caractérisé en ce que ledit dispositif de commande auxiliaire présente une structure identique à celle des dispositifs de commande principaux.

**Patentansprüche**

1. System zur zentralen Steuerung von zwei Gruppen (3.1 und 3.2) von Funkverkehrgeräten und von zwei Gruppen (4.1 und 4.2) von Navigationsfunkgeräten, die an Bord eines Luftfahrzeugs montiert sind und zwei Flugsteuerungsrechner (1.1 und 1.2) enthalten, wobei jeder dieser Flugsteuerungsrechnern den Betrieb der Navigationsfunkgeräte einer der beiden Gruppen (4.1 und 4.2) steuert, dadurch gekennzeichnet:

— daß das System zwei Steuereinrichtungen (5.1 und 5.2) enthält die zusammen im Dialog stehen und jeweils mit den besagten Gruppen (3.1 und 3.2) von Funkverkehrgeräten verbunden sind und wovon jede Berechnungsmittel (16), Mittel (17) zur Auswahl der Funkverkehrgeräte, Mittel (18) zur Auswahl der Navigationsfunkgeräte, Mittel (19) zur Frequenzeinstellung und Schaltungsmittel (26, 27, 28) enthalten;

— daß jede Steuereinrichtung (5.1 und 5.2) geeignet ist, bei Normalbetrieb, alle Funkverkehrapparate der ihr entsprechenden Gruppe und, bei Notbetrieb, wenn die andere Steuereinrichtung ausfällt, alle Funkverkehrapparate der dieser andere Steuereinrichtung entsprechenden Gruppe, zu steuern;

— daß jeder Flugsteuerungsrechner (1.1 und 1.2) geeignet ist, bei Normalbetrieb alle Navigationsfunkgeräte der ihr entsprechenden Gruppe, und, bei Notbetrieb, wenn der andere Flugsteuerungsrechner ausfällt, alle Navigationsfunkgeräte der dem anderen Flugsteuerungsrechner entsprechenden Gruppe, zu steuern;

— daß die Steuerung einer Gruppe (4.1 und 4.2) von Navigationsfunkgeräten durch den entsprechenden Flugsteuerungsrechner (1.1 und 1.2) mittels einer ersten Stellung der Schaltmittel (26, 27, 28) von der der beiden Steuereinrichtungen (5.1 und 5.2) die diesbezüglich mit dem entsprechenden Rechner verbunden ist, durchgeführt; und

— daß, falls beide Flugsteuerungsrechner (1.1 und 1.2) ausfallen, die Steuerung einer jeden der beiden Gruppen (4.1 und 4.2) der Navigationsfunkgeräte durch die damit verbundene Steuereinrichtung (5.1 und 5.2) getätigt wird und zwar über eine zweite Stellung der genannten Schaltmittel (26, 27, 28) derselben.

2. System zur zentralen Steuerung von zwei Gruppen (3.1 und 3.2) von Funkverkehrgeräten und von zwei Gruppen (4.1 und 4.2) von Navigationsfunkgeräten, die an Bord eines Luftfahrzeugs montiert sind und zwei Flugsteuerungsrechner (1.1 und 1.2) enthalten, wobei jeder dieser Flugsteuerungsrechner den Betrieb der Navigationsfunkgeräte einer der genannten Gruppen (4.1 und 4.2) steuert, dadurch gekennzeichnet:

— daß es zwei Hauptsteuereinrichtungen (5.1 und 5.2) enthält die zusammen im Dialog stehen und jeweils mit den genannten Gruppen (3.1 und 3.2) von Funkverkehrgeräten verbunden sind und jede Berechnungsmittel (16), Mittel zur Auswahl der Funkverkehrgeräte (17), Mittel (19) zur Frequenzeinstellung, erste Schaltmittel (26, 27, 28) und zweite Schaltmittel enthält;

— daß es eine Hilfssteuereinrichtung (5.3) enthält, das mit den genannten Hauptsteuerungseinrichtungen im Dialog steht und Mittel zur Berechnung, Mittel zur Auswahl der Funkverkehrapparate und Mittel zur Frequenzeinstellung enthält;

— daß es, im Normalbetrieb, alle Funkverkehrgeräte einer Gruppe entweder von der Hauptsteuereinrichtung (5.1 und 5.2) die mit ihm über eine erste Stellung der genannten zweiten Schaltmittel verbunden ist, oder von der genannten Hilfssteuereinrichtung aus, über die entsprechende Hauptsteuereinrichtung, gesteuert werden können;

— daß, wenn eine Hauptsteuereinrichtung ausfällt, alle Funkverkehrgeräte der damit verbundenen Gruppe von der anderen Hauptsteuereinrichtung aus oder von der Hilfssteuereinrichtung aus, über eine zweite Stellung der genannten zweiten Schaltmittel der ausgefallenen Hauptsteuereinrichtung, gesteuert werden kann;

— daß, wenn beide Hauptsteuereinrichtungen außer Betrieb sind, alle Funkverkehrgeräte der mit einem der genannten Hauptsteuereinrichtungen verbundenen Gruppe, von der Hilfssteuereinrichtung aus, über die genannte zweite Stellung der Schaltmittel der entsprechenden Hauptsteuereinrichtung, steuerbar ist;

— daß, wenn eine Hauptsteuereinrichtung und die Hilfseinrichtung außer Betrieb sind, die Funkverkehrsgeräte der mit der ausgefallenen Hauptsteuereinrichtung verbundenen Gruppe über die andere Hauptsteuereinrichtung gesteuert werden können;

— daß jeder Flugsteuerungsrechner (1.1 und 1.2) geeignet ist, bei Normalbetrieb, alle Navigationsfunkgeräte der mit ihm verbundenen Gruppe ansteuern und, im Notbetrieb, wenn der andere Rechner ausfällt, alle Navigationsfunkgeräte, die mit dem anderen Flugsteuerungsrechner verbunden sind, zu steuern;

— daß die Steuerung der Gruppe (4.1 und 4.2) der Navigationsfunkgeräte durch den damit verbundenen Flugsteuerungsrechner über eine erste Stellung der genannten ersten Schaltmittel (26, 27, 28) von der der beiden Hauptsteuerungseinrichtungen die mit dem diesbezüglichen Rechner verbunden ist, getätigt wird, und

— daß, wenn beide Flugsteuerungsrechner (1.1 und 1.2) außer Betrieb sind, die Steuerung jeder der Gruppen (4.1 und 4.2) von Navigationsfunkgeräten durch die Hauptsteuerungseinrichtung, welche damit verbunden ist, über eine zweite Stellung der genannten ersten Schaltmittel derselben, gewährleistet wird.

3. System nach einem der Ansprüche 1 oder 2, dadurch gekennzeichnet, daß jeder der Funkverkehrsgeräte einen steuerbaren Prioritätseingang (A) und einen Hilfseingang (B) enthält, wobei genannte Eingänge so ausgelegt sind, daß, wenn genannter Prioritätseingang (A) angesteuert ist, genannter Hilfseingang (B) geschlossen ist und daß, wenn genannter Prioritätseingang (A) nicht angesteuert ist, genannter Hilfseingang (B) geöffnet ist und daß die steuerbaren Prioritätseingänge (A) und die Hilfseingänge (B) der Funkverkehrgeräte jeder der genannten Gruppen (3.1 und 3.2) jeweils mit der Steuereinrichtung dieser Gruppe sowie mit der mit der anderen Gruppe verbundenen Steuereinrichtung, verbunden sind.

4. System nach einem der Ansprüche 1 bis 3, dadurch gekennzeichnet, daß jedes der Navigationsfunkgeräte einen steuerbaren Prioritätseingang (A) und einen Hilfseingang (B) enthält, wobei genannte Eingänge so ausgelegt sind, daß wenn genannter Prioritätseingang (A) angesteuert ist, der genannte Hilfseingang (B) geschlossen ist und daß, wenn genannter Prioritätseingang (A) nicht angesteuert ist, genannter Hilfseingang (B) geöffnet ist und daß die steuerbaren Prioritätseingänge (A) und die Hilfseingänge (B) der Navigationsfunkgeräte jeder der genannten Gruppen (4.1 und 4.2) jeweils mit dem Flugsteuerungsrechner (1.1 und 1.2) verbunden sind der an diese Gruppe angeschlossen ist über die Schaltmittel (26, 27, 28) der Steuereinrichtung (5.1, 5.2) und mit dem Flugsteuerungsrechner der an die andere der genannten Gruppen über eine direkte Verbindung angeschlossen ist.

5. System nach einem der Ansprüche 3 oder 4, dadurch gekennzeichnet, daß die genannten steuerbaren Prioritätseingänge durch ein einfaches elektrisches Signal aktiviert werden, z.B. durch Legen an Masse.

6. System nach einem der Ansprüche 2 bis 5, dadurch gekennzeichnet, daß genannte Hilfssteuereinrichtung ein ähnliches Gefüge hat wie die Hauptsteuereinrichtungen.

**Claims**

1. System for the centralized control of two groups (3.1 and 3.2) of radiocommunication apparatuses and two groups (4.1 and 4.2) of radionavigation apparatuses mounted on board an aircraft provided with two flight management computers (1.1 and 1.2), each of said flight management computers controlling the operation of the radionavigation apparatuses of one of said groups (4.1 and 4.2), characterized in that:

— two control devices (5.1 and 5.2) are provided dialoguing with each other, respectively associated with said groups (3.1 and 3.2) of radiocommunication apparatuses and each including computing means (16), radiocommunication apparatus selection means (17), radionavigation apparatus selection means (18), frequency adjustment means (19) and switching means (26, 27, 28);

— each control device (5.1 and 5.2) is capable of controlling, under normal operating conditions, the whole of the radiocommunication apparatuses of the group which is associated therewith and, under emergency operating conditions when the other control device is out of service, the whole of the radiocommunication apparatuses of the group associated with this other control device;

— each flight management computer (1.1 and 1.2) is able to control, under normal operating conditions, the whole of the radionavigation apparatuses of the group which is associated therewith and, under emergency operating conditions when the other flight management computer is out of service, the whole of the radionavigation apparatuses of the group associated with this other flight management computer;

— the control of one group (4.1 and 4.2) of radionavigation apparatuses by the associated flight management computer (1.1 and 1.2) is provided through a first position of the switching means (26, 27, 28) of that one of the two control devices (5.1 and 5.2) which is associated for this purpose with said computer; and

— in the case where the two flight management computers (1.1 and 1.2) are out of service, the control of each of the groups (4.1 and 4.2) of the radionavigation apparatuses is obtained by the associated control device (5.1 and 5.2) through a second position of said switching means thereof (26, 27, 28).

2. System for the centralized control of two groups (3.1 and 3.2) of radiocommunication apparatuses and two groups (4.1 and 4.2) of radionavigation apparatuses mounted on board an aircraft provided with two flight management computers (1.1 and 1.2), each of said flight management computers controlling the operation of the radionavigation apparatuses of one of said groups (4.1 and 4.2), characterized in that:

— two main control devices (5.1 and 5.2) are provided dialoguing with each other, respectively associated with said groups (3.1 and 3.2) of radiocommunication apparatuses and each including computing means (16), radiocommunication apparatus selection means (17), radionavigation apparatus selection means (18), frequency adjustment means (19), first switching means (26, 27, 28) and second switching means;

— an auxiliary control device (5.3) is further provided dialoguing with said main control devices and including computing means, radiocommunication apparatus selection means and frequency adjustment means;

— under normal operating conditions the whole of the radiocommunication apparatuses of one group is controllable either from the main control device (5.1 and 5.2) which is associated therewith through a first position of said second switching means, or from said auxiliary control device through the corresponding main control device;

— when a main control device is out of service, the whole of the radiocommunication apparatuses of the associated group is controllable from the other main control device or from the auxiliary control device through a second position of said second switching means of the main control device out of service;

— when the two main control devices are out of service, the whole of the radiocommunication apparatuses of the group associated with one of said main control devices is controllable from the auxiliary control device through said second position of said switching means of the corresponding main control device;

— when a main control device and the auxiliary control device are out of service, the radiocommunication apparatuses of the group associated with said main control device out of service are controllable from the other main control device;

— each flight management computer (1.1 and 1.2) is capable of controlling, under normal operating conditions, the whole of the radionavigation apparatuses of the group which is associated therewith and, under emergency operating conditions when the other flight management computer is out of service, the whole of the radionavigation apparatuses of the group associated with this other flight management computer;

— control of the group (4.1 and 4.2) of radionavigation apparatuses by the associated flight management computer is provided through a first position of said first switching means (26, 27, 28) of that one of the two main control devices which is associated for this purpose with said computer; and

— in the case where the two flight management computers (1.1 and 1.2) are out of service, control of each of the groups (4.1 and 4.2) of the radionavigation apparatuses is obtained by the associated main control device through a second position of said first switching means thereof.

3. System according to one of claims 1 or 2, characterized in that each of the radiocommunication apparatuses includes a controllable priority input (A) and an auxiliary input (B), said inputs being arranged so that, when said priority input (A) is controlled, said auxiliary input (B) is closed and when said priority input (A) is not controlled, said auxiliary input (B) is open and in that said controllable priority inputs (A) and said auxiliary inputs (B) of the radiocommunication apparatuses of each of said groups (3.1 and 3.2) are respectively connected to the control device associated with this group and to the control device associated with the other of said groups.

4. System according to one of claims 1 to 3, characterized in that each of the radionavigation apparatuses includes a controllable priority input (A) and an auxiliary input (B), said inputs being arranged so that, when said priority input (A) is controlled, said auxiliary input (B) is closed and when said priority input (A) is not controlled, said auxiliary input (B) is open and in that said controllable priority inputs (A) and said auxiliary inputs (B) of the radionavigation apparatuses of each of said groups (4.1 and 4.2) are respectively connected to the flight management computer (1.1 and 1.2) associated with this group through the switching means (26, 27, 28) of the associated control device (5.1 and 5.2) and to the flight management computer associated with the other of said groups through a direct connection.

5. System according to any one of claims 3 or 4, characterised in that said controllable priority inputs are activated by a simple electric signal, such as earth to frame.

6. System according to any one of claims 2 to 5, characterized in that said auxiliary control device has a structure identical to that of the main control devices.

*Fig:1*

*Fig:3*

Fig. 2

EP 0 227 520 B1

13

**Fig. 4**

**Fig. 5**

**Fig.6**

**Fig.7**

## Fig. 8

## Fig. 9

**Fig. 10**

**Fig. 11**

**Fig. 12**

Fig.13